# EUROPEAN PATENT APPLICATION

(11) **EP 1 986 298 A1**
(43) Date of publication of application: **29.10.2008**
(21) Application number: 07107028.8
(22) Date of filing: 26.04.2007
(51) Int. Cl.: H02G 3/06

(54) **A cable connector device**

(71) Applicant: ABB AB, 721 78 Västerås (SE)
(72) Inventor: ERIKSSON, Guy, 613 36, OXELÖSUND (SE)
(74) Representative: Fröderberg, Anders Oskar

(57) **Abstract**

A cable connector device comprising: first bushing element (1), provided with a conical inner surface (5); an annular sealing element (2,), having a part with the shape of a truncated cone with an outer sealing surface (7) and an inner sealing surface (8), wherein said part of the sealing element (2) is discontinuous in a peripheral direction thereof in each cross section along the longitudinal direction thereof; a clamping element (3), provided so as to press the sealing element (2) in an axial direction thereof into a sealing engagement with the conical inner surface (5) of the bushing element (1). The sealing element (2) defines a single cone, wherein the inner sealing surface (8) thereof is continuous and the outer sealing surface (7) thereof is continuous. The sealing surface forms a zigzag or meander-like shape.

## Description

### TECHNICAL FIELD

The present invention relates to a cable connector device comprising: a bushing element, provided with a conical inner surface; an annular sealing element, having a part with the shape of a truncated cone with an outer sealing surface and an inner sealing surface, wherein said part of the sealing element is discontinuous in a peripheral direction thereof in each cross section along the longitudinal direction thereof, and; a clamping element, provided so as to press the sealing element in an axial direction thereof into a sealing engagement with the conical inner surface of the bushing element.

Typically, the bushing element is part of or is connected to a wall element through which an electric cable is to be guided by means of the inventive connector device. The wall element may be the wall of a casing in which there is provided a switch, an electric plug or the like for the electric connection and disconnection of the conductor of the cable in relation to any other electric equipment. The connector device may, preferably, have the task of securely holding the cable, thereby preventing any displacement thereof in an axial direction, and also to provide for a sealing between the cable and the wall element.

Even though not primarily restricted to such applications, the cable connector device of the invention is, in particular, aimed for low voltage applications.

### BACKGROUND OF THE INVENTION

Cable connector devices of the kind initially mentioned are known through prior art, their purpose being to support and hold a cable entering a casing or the like in which there is any further equipment to which the conductor is to be connected. By holding the cable, the cable connector device will prevent the cable from transmitting any forces, for instance a pulling force in the axial direction or any turning force, to any such further equipment to which it is connected inside such a casing. In most cases such a cable connector device also has to provide a sealing between the cable entering such a casing and the casing itself in order to prevent moisture and contamination from reaching the interior of the casing.

From a manufacturing point of view, and also from a users point of view, it would be beneficial to minimize the number of components of such a connector device while still providing a satisfying functionality. The handling of the connector device, including the insertion of the cable into it, and the subsequent fixing of the cable as well as the establishment of a sealing functionality should be of a non-complicated kind that can be performed readily and in a safe and secure way by an operator.

### PRIOR ART

DE 25 32 666 discloses a cable connector device of the type initially defined in this specification. The device shown in DE 25 32 666 comprises a bushing element 1 which is connected to the wall of a casing 3 and through which a cable is to extend. The bushing element 1 is cylindrical with a first section that presents a first inner diameter and a second section that presents a second diameter, said portions being interconnected by a portion that presents a conical inner surface. There is also provided an annular sealing element 6 that comprises a continuous wall that follows a meander-shaped path around the longitudinal axis thereof. The sealing element is comprised by two opposite truncated cones divided by a cylindrical portion, i.e. a portion the inner and outer diameters of which are constant along the length thereof. The sealing element 6 has an inner sealing surface that is to be in continuous contact with the outer periphery of the cable. Furthermore, there is provided a support ring 8, arranged between the inner periphery of the bushing element and the sealing element, and a further ring 11 that is to be located between the support ring 8 and a clamping element 12 by means of which an clamping compression force is applied to said rings 8, 11 and the sealing element 6. Upon application of the clamping force, the support ring 8 and the sealing element 6 will be subjected to a certain deformation, resulting in the holding and sealing of the cable. However, this design is rather complicated and includes a number of components the assembly of which is correspondingly complicated and therefore time-consuming for an operator.

### THE OBJECT OF THE INVENTION

It is an object of the present invention to present a cable connector device as initially defined, which is of uncomplicated design and therefore cost-effective to produce.

The cable connector device of the invention should also be of such a design that the handling thereof becomes uncomplicated, thereby providing for a ready and secure assembly thereof by an operator.

### SUMMARY OF THE INVENTION

The object of the invention is achieved by means of the initially defined cable connector device, characterised in that the sealing element defines a single cone, wherein the inner sealing surface thereof is continuous and the outer sealing surface thereof is continuous. Preferably, the outer and inner sealing surfaces define wave-shaped paths, wherein the wave shape thereof may differ between different embodiments. The wave line thereof may follow a soft, rounded path or a more edgy path. The important features is the continuity of said surfaces taken in combination with the peripheral or circumferential discontinuity at every cross section along the length of said truncated cone, providing for circumferential compressibility at every cross section. The use of a sealing element formed as a single truncated cone provided with continuous sealing surfaces will allow for a simple axial insertion of said truncated cone into the conical receiving opening of the bushing element. By a mere application of an axial force by means of the clamping element, the truncated cone of the sealing element will be forced further into the mating bushing element, whereby the sealing element, thanks to its design, will be able to undergo a reduction of its inner and outer diameters, thereby resulting in a nipping of the cable. Since the outer and inner surfaces of the truncated cone are continuous, a sealing effect will also be obtained, in relation to the bushing element and in relation to the cable.

Preferably, the outer sealing surface of sealing element is in direct and continuous contact with the conical inner surface of the bushing element, while the inner sealing surface thereof is in direct and continuous contact with the outer periphery of the cable. However, in order to improve the sealing function, there might be provided any kind of ring element, for example made of a softer material such as rubber, between the outer sealing surface and the conical inner surface of the bushing element, or between the cable and the inner sealing surface of the sealing element.

According to one embodiment, the part of the sealing element that defines the truncated cone comprises a string of material defining a meander-shaped path around a longitudinal axis thereof. The meander-shape will result in the open, compressible design of the sealing element that has been described above.

According to one embodiment the outer diameter of said part of the sealing element is variable in each cross section along the longitudinal direction of the sealing element, i.e. the part of the sealing element that provides for the sealing functionality, in other words the part shaped like a truncated cone.

According to one embodiment, the inner diameter of said sealing element is variable in each cross-section along the longitudinal direction of said part of the sealing element, i.e. the part shaped like a truncated cone.

According to one embodiment, said part of the sealing element comprises a plurality of trapetzoidal walls extending in the longitudinal direction of the sealing element and located in angularly displaced axial planes around the longitudinal axis thereof, and a plurality of interconnecting wall portions that interconnect said trapetzoidal walls and define portions of a circle sector, said interconnecting wall portions being arranged in two different radial planes distant from each other in the longitudinal direction of the sealing element.

According to one embodiment, the sealing element is an element separate from the clamping element.

According to one embodiment, the clamping element and the sealing element comprises axial engagement means that prevents axial displacement of the sealing element in relation to the clamping element but allows for a rotational motion of the sealing element in relation to the clamping element. Thereby, disassembly of the assembled device is facilitated since the sealing element will follow the clamping element as the latter is removed from the bushing element. This solution also permits the clamping element to be rotated in relation to the bushing element upon tightening thereof, without a corresponding rotation of the sealing element in relation to the bushing element and in relation to a cable extending therethrough. Accordingly, at least the part of the sealing element that defines a truncated cone should be rotationally arranged in relation the clamping element. Accordingly, said functional part of the sealing element may be rotationally connected to another part of the sealing element that, in its turn, is non-rotationally connected to the clamping element.

According to one embodiment, the engagement means comprises a snap connection.

According to one embodiment, the sealing element is immovably connected to the clamping element. In other words, the sealing means is locked such that both rotational and axial motion thereof in relation to the clamping element is inhibited.

According to one embodiment, the sealing element forms an integrated part of said clamping element. Thereby, the number of separate components of the device is further reduced, and the manufacturing costs may also be reduced.

According to one embodiment, the dimension of said string of material in a tangential direction and the extension of said path permit a reduction of the inner diameter of the element with a factor 2 or more, preferably up to a factor 4 at most, up to a point of contact between adjacent opposite axial surfaces of said string of material. Thereby, a rather large range of different cable diameters can be adopted by means of one and the same sealing element.

According to one embodiment, the cable connector device comprises a cable extending through said sealing element and generally coaxial therewith, said cable being clamped by the sealing element as the latter is forced into the bushing element through the action of the clamping element.

According to one embodiment, the continuous inner sealing surface, upon compression of the sealing element in the bushing element by means of the clamping element, is in continuous contact with an outer periphery of the cable. Thereby, a good sealing functionality is provided for.

According to one embodiment, the sealing element presents a constant inner diameter along the length of the part thereof shaped as a truncated cone.

Further features and advantages of the present invention will be presented in the following detailed description of preferred embodiments and in the annexed patent claims.

### BRIEF DESCRIPTION OF THE DRAWINGS

Hereinafter preferred embodiments of the invention will be described by way of example with reference to the annexed drawing, on which:
Fig. 1 is an exploded view of a cable connector device according to a first embodiment of the invention,
Fig. 2 is a cross-section of the cable connector device of fig. 1 in an assembled state,
Fig. 3 is an exploded view of a cable connector device according to a second embodiment,
Fig. 4 is a cross-section of the cable connector device of fig. 3 in an assembled state,
Fig. 5 is an exploded view of a cable connector device according to a third embodiment, and
Fig. 6 is a cross-section of the cable connector device of fig. 5 in an assembled state.

### DETAILED DESCRIPTION OF THE INVENTION

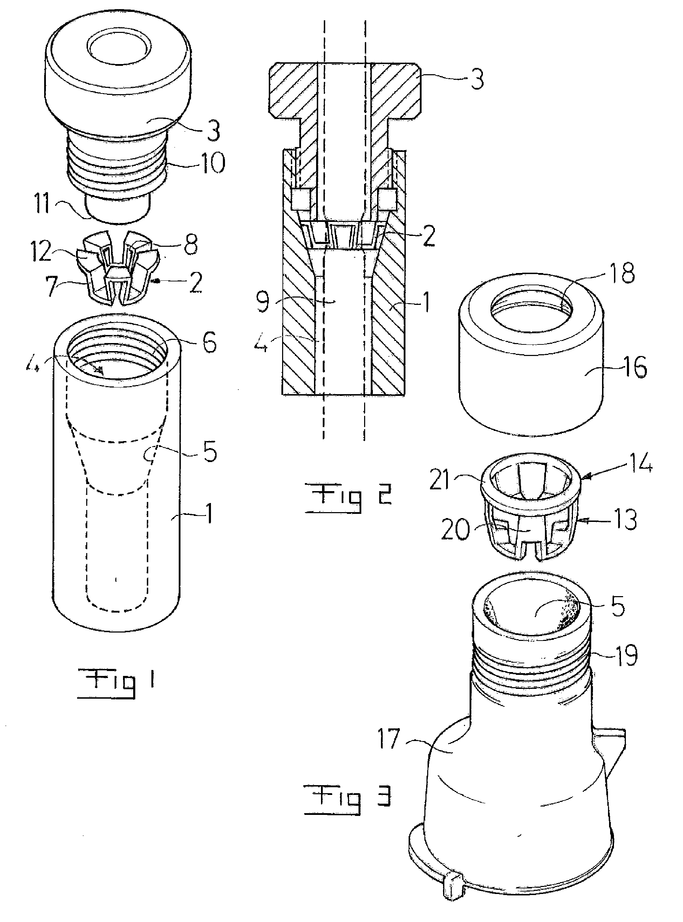

Fig. 1 shows a first embodiment of a cable connector device of the invention, wherein the device comprises a bushing element 1, a sealing element 2, and a clamping element 3.

The bushing element 1 is only schematically shown and may comprise further features or parts for the attachment thereof to a wall or the like, preferably the wall of a casing that contains any kind of electric equipment to which a cable is to be connected. However, an essential feature of the bushing element is a through opening 4 through which a cable is to be inserted and guided. Along a part thereof, the bushing element present a conical inner surface 5 the task of which is to act as a seat for the sealing element 2. The bushing element 1 also comprises an engagement means formed by a thread 6 provided for the engagement with a corresponding engagement means of the clamping device 3. Preferably, the bushing element 1 comprises a dielectric material such as a polymer.

The sealing element 2 is of annular shape and is formed by a string of material extending in a wave-like pattern around a centre axis thereof. The sealing element 2 could be regarded as composed by a continuous wall following a meander-shaped path around its centre axis. The outer periphery of the sealing element increases in one of its longitudinal directions, such that the outer periphery thereof could be inscribed in, or resembles that of, a truncated cone. However, the sealing element is of an open and easily radially compressible design, since it presents a discontinuous outer periphery, as seen in the peripheral direction, at all cross sections along the length of the truncated cone.

The radial outer periphery of the sealing element 2 defines an outer sealing surface 7 which, thanks to the wave-shape or meander-shape of the string of material that forms the sealing element 2, is continuous.

The inner periphery of the sealing element 2 is also continuous. In a non loaded condition the inner periphery of the sealing element may, but need not necessarily, be inscribed in the mantle surface of a cylinder. In other words, the inner diameter of the sealing element 2 may be constant along the part thereof that corresponds to the extension of the bevelled outer periphery, i.e. the part shaped as a truncated cone. Upon compression of the sealing element 2, the inner periphery will define a continuous sealing surface 8 that extends in continuous contact with a cable, indicated with 9 in fig. 2, that extends through the sealing element 2.

Preferably, the sealing element 2 comprises a dielectric material such as a polymer. It might be composed by different materials on the inner periphery and outer periphery. For example, the inner sealing surface 8 may be comprised by a material that is harder than the material of the outer sealing surface 7. In order to achieve a best possible sealing, the material of the inner sealing surface 8 of the sealing element 2 may be harder than the material of the outer periphery of the cable 9, while the material at the outer sealing surface 7 of the sealing element 2 may be softer than the material of conical inner surface 5 of the bushing element 1. For example the outer sealing surface 7 may be formed by a layer of rubber material applied to the outer periphery of the sealing element 2, wherein the remaining part of the sealing element comprises one and the same polymer, produced in one step by means of, for example, moulding.

The clamping element 3 present an engagement means formed by a thread 10 by means of which it is to attached to the bushing element 1. The clamping element 3 also presents a support surface 11 that is assumed to bear against axial support surfaces 12 located at the large end of the sealing element 2. When being tightened against the bushing element 1, the clamping element 3 will clamp and compress the sealing element 2 which should be located in the cone-shaped seat 5 of the bushing element 1, as shown in fig. 2. As a result of the clamping and compression of the sealing element 2, the outer periphery as well as the inner periphery thereof will be reduced. Accordingly, the cable 9 extending through the opening defined by the sealing element 2 will be squeezed by the sealing element 2. The inner sealing surface 8 will be in continuous and sealing contact with the outer periphery of the cable 9, while the outer sealing surface 7 thereof will be in continuous and sealing contact with the conical inner surface 5 of the bushing element 1. Thereby, the cable 9 will be held in a fixated position, and a sealing function will be achieved.

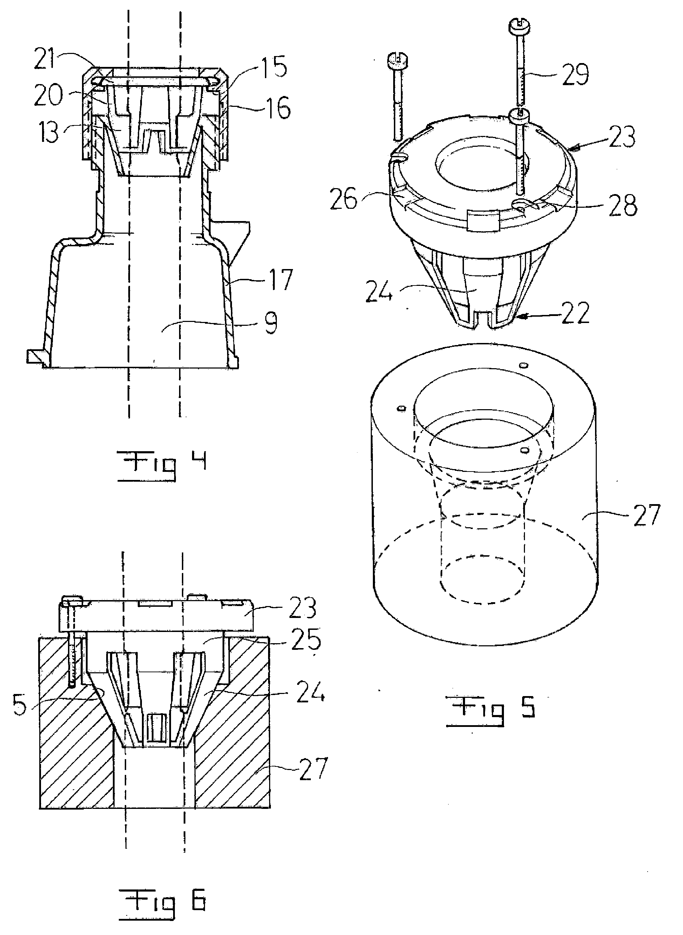

Figs. 3 and 4 show a second embodiment of the invention in which the sealing element 13 is provided with engagement means 14 with which it is supposed to engage with a corresponding engagement means 15 of the clamping element 16. The engagement means 14 of the sealing element 13 and that 15 of the clamping element 16 form a snap connection which will allow rotational displacement of the sealing element 13 in the clamping element but will inhibit an axial displacement thereof. Thereby, during disassembly of the assembled cable connector device, with a cable 9 therein, the sealing element 13 will more easily be released from the cable 9 and taken out of the bushing element 17. Furthermore, since rotation of the sealing element 13 in relation to the clamping element 16 is permitted, the engagement means between the clamping element 16 and the bushing element 17 may comprise threads 18, 19 on said elements. The clamping element 16 will therefore be permitted to be rotated in relation to the bushing element 17 without thereby forcing the sealing element 13 to a corresponding rotation, which might hurt the cable 9 or the sealing element 13.

The engagement means 14 of the sealing element 13 comprises a prolongation 20 of the sealing element 13 from the large end of a part thereof shaped in accordance with the disclosure of the first embodiment of figs. 1 and 2. The prolongation comprises tongues 20 extending from the large end of said truncated cone, more precisely from surfaces corresponding to the support surfaces 12 of the embodiment shown in figs. 1 and 2. At the opposite end, the tongues 20 are connected to a ring 21, which is aimed to snap in behind the engagement means 15 of the clamping element, whereby the engagement means 15 of the clamping element 16 is formed by a plurality of projections on the inner periphery of the latter.

Figs. 5 and 6 show a third embodiment of the invention, in which the sealing element 22 is fixedly connected to the clamping element 23. For this purpose, the sealing element comprises, or is connected to, a prolongation 24 that extends from the large end of the truncated cone that forms the functional part of the sealing element 22. This functional part of the sealing element may have a design corresponding to the one of the sealing element 2 of the first embodiment, disclosed with reference to figs. 1 and 2. The prolongation 24 extends from the end of the truncated cone and, likewise to the embodiment of figs. 3 and 4, it comprises a plurality of tongues that are connected to a ring 25 in their opposite end (with regard to the end connected to the functional part of the sealing element 22). Moreover, the sealing element 22 comprises elements 26 provided for the purposes of preventing rotation of the sealing element 22 in relation to the clamping element 23. Here, the locking elements 26 are formed by projections that, in the assembled state of the connector device, project into corresponding recesses in the clamping device. The locking elements extend from the ring 25. There is also provided engagement means corresponding to the ones of the embodiment disclosed with reference to figs. 3 and 4 for the locking of the sealing element 22 in relation to the clamping element 23 in an axial direction. Accordingly, the ring 25 is provided with a radial flange (not shown) arranged so as to snap in behind a plurality of projections (not shown) on an inner periphery of a part of the clamping element 23.

Since there is a radial locking as well as an axial locking of the sealing element 22 in relation to the clamping element 23, the tightening of the clamping element 23 against the bushing element 27 should be performed by a non-turning motion, in order to prevent the sealing element 22 from thereby being rotated in relation to the cable 9 and the surrounding bushing element 27. Accordingly, there are provided through holes 28 in the clamping element 27 through which tightening screws 29 are to be driven in order to clamp the clamping element 23 against the bushing element 27.

As an alternative to the embodiment shown in figs. 5 and 6, in which the sealing element 22 still is a component separate from the, the sealing element might be provided as an integrated part of the clamping element, moulded in one single piece therewith.

## Claims

1. A cable connector device comprising
- a first bushing element (1, 17, 27), provided with a conical inner surface (5),
- an annular sealing element (2, 13, 22), having a part with the shape of a truncated cone with an outer sealing surface (7) and an inner sealing surface (8), wherein said part of the sealing element (2, 13, 22) is discontinuous in a peripheral direction thereof in each cross section along the longitudinal direction thereof,
- a clamping element (3, 16, 23), provided so as to press the sealing element (2, 13, 22) in an axial direction thereof into a sealing engagement with the conical inner surface (5) of the bushing element (1, 17, 27), **characterised in that** the sealing element (2, 13, 22) defines a single cone, wherein the inner sealing surface (8) thereof is continuous and the outer sealing surface (7) thereof is continuous.

2. A cable connector device according to claim 1, **characterised in that** said part of the sealing element (2, 13, 22) comprises a string of material defining a meander-shaped path around a longitudinal axis thereof.

3. A cable connector device according to claim 1 or 2, **characterised in that** the outer diameter of said part of the sealing element (2, 13, 22) is variable in each cross section along the longitudinal direction of the sealing element (2, 13, 22).

4. A cable connector device according to any one of claims 1-3, **characterised in that** the inner diameter of said part of the sealing element (2, 13, 22) is variable in each cross-section along the longitudinal direction of the sealing element (2, 13, 22).

5. A cable connector device according to any one of claims 1-4, **characterised in that** said part of the sealing element (2, 13, 22) comprises a plurality of trapetzoidal walls extending in the longitudinal direction of the sealing element (2, 13, 22) and located in angularly displaced axial planes around the longitudinal axis thereof, and a plurality of interconnecting wall portions that interconnect said trapetzoidal walls and define portions of a circle sector, said interconnecting wall portions being arranged in two different radial planes distant from each other in the longitudinal direction of the sealing element (2, 13, 22).

6. A cable connector device according to any one of claims 1-5, **characterised in that** the sealing element (2, 13, 22) is an element separate from the clamping element (3, 16, 23).

7. A cable connector device according to any one of claims 1-6, **characterised in that** the clamping element (16) and the sealing element (13) comprises axial engagement means (14, 15) that prevents axial displacement of the sealing element (13) in relation to the clamping element (16) but allows for a rotational motion of the sealing element (13) in relation to the clamping element (16).

8. A cable connector device according to claim 7, **characterised in that** said engagement means (14, 15)comprises a snap connection.

9. A cable connector device according to any one of claims 1-8, **characterised in that** the sealing element (22) is immovably connected to the clamping element (23).

10. A cable connector device according to claim 9, **characterised in that** the sealing element forms and integrated part of said clamping element.

11. A cable connector device according to any one of claims 2-10, **characterised in that** the dimension of said string of material in a tangential direction and the extension of said path permit a reduction of the inner diameter of the element with a factor 2 or more up to a point of contact between adjacent opposite axial surfaces of said string of material.

12. A cable connector device according to any one of claims 10-13, **characterised in that** it comprises a cable (9) extending through said sealing element (2, 13, 22) and generally coaxial therewith, said cable (9) being clamped by the sealing element (2, 13, 22) as the latter is forced into the bushing element (1, 17, 27) through the action of the clamping element (3, 16, 23).

13. A cable connector device according to claim 12, **characterised in that** the continuous inner sealing surface, upon compression of the sealing element (2, 13, 22) in the bushing element (3, 17, 27) by means of the clamping element (3, 16, 23), is in continuous contact with an outer periphery of the cable

14. A cable connector device according to any one of claims 1-13, **characterised in that** the sealing element (2, 13, 22) presents a constant inner diameter along the length of the part thereof shaped as a truncated cone.
